# EUROPEAN PATENT APPLICATION

(11) **EP 1 428 687 A1**
(43) Date of publication of application: **16.06.2004**
(21) Application number: 02765513.3
(22) Date of filing: 12.09.2002
(51) Int. Cl.: B60C 9/18, B60C 9/22, B60C 17/00

(54) **PNEUMATIC TIRE**

(30) Priority: 17.09.2001 JP 2001281076
(71) Applicant: Bridgestone Corporation, Tokyo 104-8340 (JP)
(72) Inventor: KOHNO, Yoshihide, Kunitachi-shi, Tokyo 186-0001 (JP); KUROKAWA, Makoto, c/o BRIDGESTONE CORP., Kodaira-shi, Tokyo 187-8531 (JP)
(74) Representative: Whalley, Kevin
(86) International application number: PCT/JP2002/009365
(87) International publication number: WO 2003/024727

(57) **Abstract**

It is to provide a pneumatic tire in which a bulk modulus of elasticity of a tread rubber is small and an inverse V-shaped bending in a tread portion is suppressed to effectively prevent separation failure, breakage and the like of a belt layer, which comprises a radial carcass, a belt of two belt layers with a cross cord arrangement reinforcing a tread portion at an outer peripheral side of a crown portion of the radial carcass and a rubber reinforcing layer having a crescent-shaped form at a cross section, wherein the tread rubber forming a ground contact face of the tread is made of rubber having a bulk modulus of elasticity of not more than 4 GPa and an additional belt layer of cords having a cord angle with respect to an equatorial plane of the tire larger than that of cords in each of belt layers is arranged on an outer peripheral side of the belt and a compression rigidity of the additional belt layer in a widthwise direction of the tread is made 2 times or more larger than that of the belt layer.

## Description

### [TECHNICAL FIELD]

This invention relates to pneumatic tires, in particular studless tires, and especially proposes a technique of preventing separation failure or breakage of a belt layer by suppressing buckling of a tread portion during the running under a low internal pressure.

### [BACKGROUND ART]

When the pneumatic tire is run under loading while gradually decreasing a tire internal pressure due to the sticking of a nail or other pointed body into a tread portion of the tire, the separation failure of a belt layer is caused by the occurrence of buckling in the tread portion and hence there is feared the occurrence of burst and the like due to peeling of a tread rubber, breakage of the belt layer and so on.

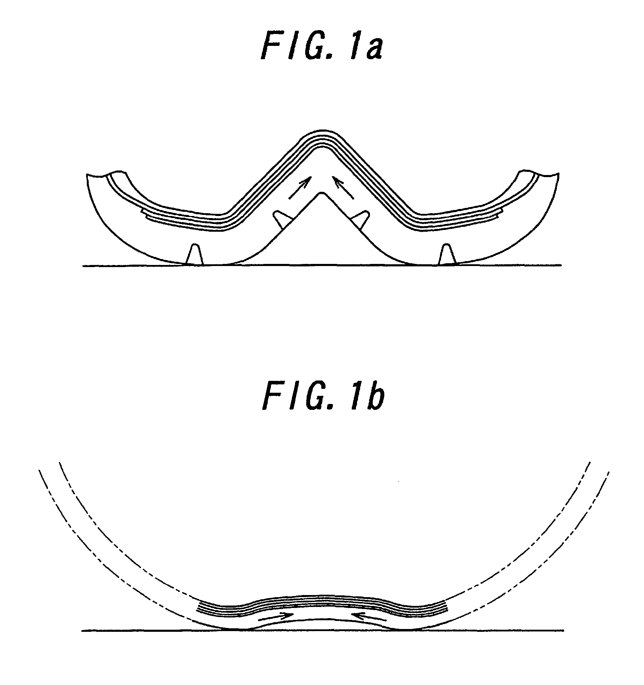

Particularly, the buckling of the tread portion is remarkable when the tire is run at an extremely decreased internal pressure on a road surface having a low friction coefficient such as old asphalt road surface, stone-paved road surface or the like having a small surface roughness under loading. In this case, as exaggeratedly shown at a widthwise diagrammatic section of the tire in FIG. 1a, a widthwise central part of the tread portion largely rises from the road surface so as to fold the tread portion in substantially an inverse V-shaped form just under loading, and hence the separation failure, breakage and the like of the belt layer is particularly and easily caused in such a folded portion.

As shown at a diagrammatic section along an equatorial plane of the tire in FIG. 1b, the similar result is caused even in a circumferential direction of the tread portion and a ground contact zone of the tread portion is subjected to compression in the circumferential direction around a part just under loading, so that the tendency of raising the central part of the tread portion is more increased.

According to such a buckling phenomenon, the tread rubber mainly located at an outer periphery side of the belt is subjected to compression from both widthwise and circumferential directions of the tread at the central part of the tread portion to cause volume change.

For this end, when the tread rubber is made of rubber hardly causing the volume change and having a high bulk modulus of elasticity, the folding deformation of the tread portion as shown in FIG. 1a can be effectively suppressed by the high bulk modulus of elasticity and hence the separation failure, breakage and the like of the belt layer are advantageously prevented. Incidentally, when the tread rubber is made of rubber having a bulk modulus of elasticity of more than 5 GPa, even if the tire internal pressure drops to 10 kPa, it is possible to continue the running over 200 km.

However, when the tread rubber is made of rubber having a bulk modulus of elasticity of not more than 4 GPa, which is usually used in the studless tire, the inverse V-shaped deformation as mentioned above can not be sufficiently suppressed, so that the running to 200 km becomes impossible when the tire internal pressure drops to 10 kPa.

On the other hand, the conventional technique of suppressing the same kind of buckling are disclosed in JP-A-6-191243 and International Publication WO97/01452.

In the former tire, a belt comprised of at least two cross cord layers and a cap made of an organic fiber cord(s) wound along an outer periphery thereof are arranged on an outer periphery side of a crown portion of a radial carcass, and also a rubber reinforcing layer having a crescent-shaped section is arranged over a full region of a sidewall portion along an inner face of the carcass and a tie element of at least one layer having an arrangement of many cords substantially perpendicular to an equatorial plane of the tire is arranged between the belt and the cap. By such a tie element is suppressed such a pantograph behavior that a diamond shape defined by crossing cords of the belt layers with each other stretches in a widthwise direction of the tread, whereby the degree of the above buckling in the tread portion is reduced.

In the latter tire disclosed in the International Publication WO97/01452, the belt layers including a plurality of metal cord layers and a tread are successively arranged on an outer periphery of a crown portion of a radial carcass and a rubber reinforcing layer bearing part of load and having a crescent-shaped section is provided on an inner peripheral face of a side portion of the carcass, and an auxiliary layer of organic fiber cords is arranged between the carcass and the belt layer so as to cross the organic fiber cord with cords of the carcass and the belt layer with respect to a central equatorial plane sandwiching therebetween. The auxiliary layer is located outside a bending neutral axis in the buckling of the tread portion to enhance the bending rigidity of the tread portion by a tension resistance of the auxiliary layer, whereby the buckling is suppressed.

However, all of these conventional tires aim at the running on general-purpose road surfaces having a large friction coefficient, so that they are used under conditions hardly causing the buckling and also the bulk modulus of elasticity in the tread rubber is high and hence the buckling phenomenon itself is not so serious.

It is, therefore, an object of the invention to provide pneumatic tires capable of effectively preventing the buckling of the tread portion and hence the separation failure, breakage and the like of the belt layer by developing high resistance force with means different from the tread rubber to the inverse V-shaped bending of the tread portion in a general studless tire which has frequently a chance of running on a road surface having a low friction coefficient such as snow and ice roads and the like and is relatively low in the bulk modulus of elasticity for ensuring a gripping force on the road surface.

### [DISCLOSURE OF THE INVENTION]

The pneumatic tire according to the invention comprises a tread portion, a pair of sidewall portions continuing to the tread portion, a bead portion continuing to an inner peripheral side of each sidewall portion, a radial carcass comprised of one or more carcass plies extending between bead cores arranged in the respective bead portions to reinforce these portions, a belt comprised of two or more belt layers reinforcing the tread portion at an outer peripheral side of a crown portion of the radial carcass, cords of which layers being crossed with each other, and a rubber reinforcing layer arranged over substantially a full region of the sidewall portion along an inner face of the radial carcass and having substantially a crescent-shaped form at its cross section, in which a tread rubber forming a ground contact face of the tread is a rubber having a bulk modulus of elasticity of not more than 4 GPa, which is usually used in a studless tire, and an additional belt layer of cords having a cord angle larger than those of the belt layers with respect to an equatorial plane of the tire is arranged on an outer peripheral side of the belt and has a compression rigidity in widthwise direction of the tread of 2 times or more larger than that of the belt layer. Moreover, the term "compression rigidity in widthwise direction of the tread" in the additional belt layer and the belt layer used herein means a rigidity of a layer portion per unit width in a circumferential direction of the tread against compression force in the widthwise direction of the tread.

For instance, a tread shoulder part in the ground contact face of the tread is apt to be easily slipped inward in the widthwise direction on an ice road or the like having a small friction force accompanied with the drop of the tire internal pressure and hence the buckling phenomenon as mentioned above is easily caused. On the other hand, in the studless tire, the tread rubber having a low bulk modulus of elasticity can not develop a large resistance force to such a buckling that a widthwise central part of the tread portion rises up from the road surface accompanied with the drop of the internal pressure.

In the invention, however, the additional belt layer arranged on the outer peripheral side of the belt functions as a shore member to the inverse V-shaped bending deformation and effectively withstands to such a bending. This bending resistance can be increased by making the cord angle of the cords in the additional belt layer with respect to the equatorial plane of the tire larger than that of the cords in the belt layers to approach the extending direction of the cord in the additional belt layer to a widthwise direction of the tread, so that even when the friction coefficient of the road surface is small, the occurrence of the buckling in the tread portion due to the drop of the tire internal pressure can be effectively suppressed to advantageously eliminate fears such as separation failure and breakage of the belt layer and the like.

Further, according to the invention, the compression rigidity of the additional belt layer in the widthwise direction of the tread is made 2 times or more that of the belt layer, whereby the slipping displacement of the tread shoulder portion on ice road or the like can be sufficiently restrained to more effectively prevent the occurrence of the buckling.

In the invention, it is preferable that the additional belt layer is made of steel cords capable of developing a high rigidity to the compression force in the widthwise direction of the tread. Particularly, the cord is preferable to have a single twisting structure such as 1×N or 1+N and a compression modulus of elasticity of not less than 10 GPa.

Also, it is preferable that the additional belt layer is directly arranged on the outer peripheral side of the belt adjacent thereto irrespectively of a case that a cap of one or more layers having a helically winding structure of an organic fiber cord or the like extending substantially in the circumferential direction of the tread is arranged side the outer layer of the belt.

That is, if the additional belt layer is arranged adjacent to the outer peripheral side of the cap, the distance between the belt layer and the additional belt layer becomes large and the degree of restraining the deformation of the belt layer becomes small and hence the effect of suppressing the inverse V-shaped bending deformation is small.

When the cords of the additional belt layer are extended in the same direction as the extending direction of the cords in the outermost belt layer with respect to the equatorial plane of the tire, a so-called ply steer can be made small to advantageously control the increase of the rolling resistance of the tire, while when the cords of the additional belt layer are extended in a direction opposite to the extending direction of the cords in the outermost belt layer, the rigidity of the tread portion can be more increased to effectively suppress the occurrence of the buckling.

Moreover, it is preferable that the cord angle of the additional belt layer with respect to the equatorial plane of the tire is within a range of 40-90° in view of more effective presence of the additional belt layer. When the cord angle is less than 40°, a sufficient angle difference can not be provided to a generally extending angle of the cord in the belt layer of 20-30° and it is difficult to develop a high rigidity to the compression force in the widthwise direction of the tread, while when it exceeds 90°, the extending direction of the cords in the additional belt layer is quite opposite to the above case with respect to the equatorial plane of the tire.

Also, a width of the additional belt layer is preferable to be within a range of 30-120% of a belt width.

When the width is less than 30%, the function as the shore member to the inverse V-shaped bending deformation is not sufficient, while when it exceeds 120%, the effect of suppressing the inverse V-shaped bending deformation becomes not large and the increase of tire weight is rather caused.

Furthermore, the carcass ply is effective to be made of organic fiber cords having a lighter weight in order to control the increase of the tire weight resulted from the arrangement of the additional belt layer to a small level.

### [BRIEF DESCRIPTION OF THE DRAWINGS]

FIG. 1 is diagrammatic view illustrating an embodiment of causing buckling in the conventional tire.
FIG. 2 is a widthwise section view of a half portion of an embodiment of the tire according to the invention.
FIG. 3 is a diagrammatically section view illustrating an action of an additional belt layer.
FIG. 4 is a schematic view of a measuring device for a bulk modulus of elasticity.

### [BEST MODE FOR CARRYING OUT THE INVENTION]

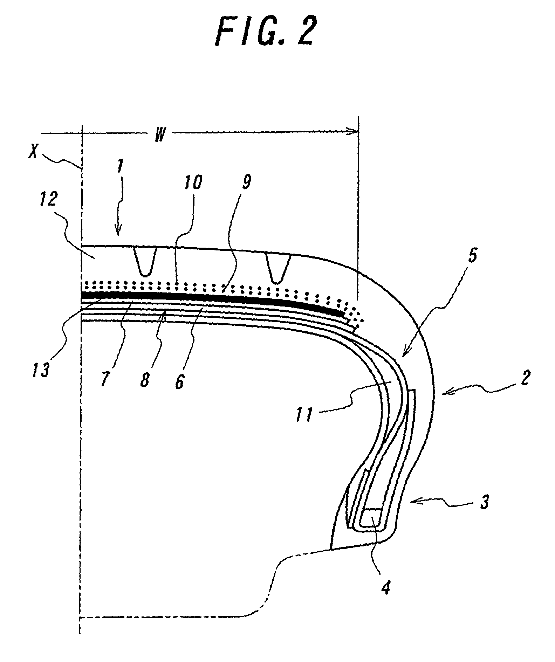

In an embodiment of the invention shown in FIG. 2, numeral 1 is a tread portion, numeral 2 a sidewall portion continuously extending inward from a side part of the tread portion 1 in a radial direction, and numeral 3 a bead portion continuing to an inner peripheral side of the sidewall portion 2 in the radial direction.

A radial carcass 5 toroidally extending between bead cores 4 embedded in the respective bead portions 3 to reinforce the above portions 1, 2, 3 is comprised of at least one carcass ply and a side portion of the radial carcass 5 is turned outward around the bead core 4 to a high level in a radial direction. Also, a belt 8 comprised of two or more layers containing cords such as steel cords, aramid fiber cords or the like crossed with each other between these layers, two belt layers 6, 7 in the illustrated embodiment is arranged on an outer peripheral side of a crown portion of the radial carcass 5. Further, a cap of, for example, two layers 9, 10 having a helically winding structure of an organic fiber cord extending substantially in a circumferential direction of the tire is arranged on an outer layer side of the belt 8. In addition, a rubber reinforcing layer 11 having substantially a crescent-shaped form at a cross section is arranged over substantially a whole region of the sidewall portion 2 along an inner face of the radial carcass 5.

Moreover, a tread rubber 12 forming a ground contact face of a tread has a bulk modulus of elasticity of not more than 4 GPa, while an additional belt layer 13 is arranged on a position directly adjacent to the outer peripheral side of the belt 8, i.e. a position adjacent to inner peripheral side of the cap 9, 10 in the illustrated embodiment, preferably, over a range of 30-120% of a belt width W with respect to an equatorial plane E of the tire. Cords constituting the additional belt layer 13, preferably steel cords are extended at a cord angle with respect to the equatorial plane E larger than that of the cords in the belt layers 6, 7. Further, the additional belt layer 13 has a rigidity in a widthwise direction of the tread higher two or more times than that of the belt layers 6, 7.

Since the cords in each of the belt layers 6, 7, for examples, steel cords, aramid fiber cords or the like are generally extended at a cord angle of approximately 20-30° in opposite directions to each other with respect to the equatorial plane E of the tire, it is preferable that the cord angle of the additional belt layer 13 with respect to the equatorial plane is made within a range of 40-90°. In this case, the extending direction of the cords in the additional belt layer may be selected from either the same or different direction to the extending direction of the cords in the belt layer 7 as an outermost layer.

More preferably, the carcass ply is made of organic fiber cords.

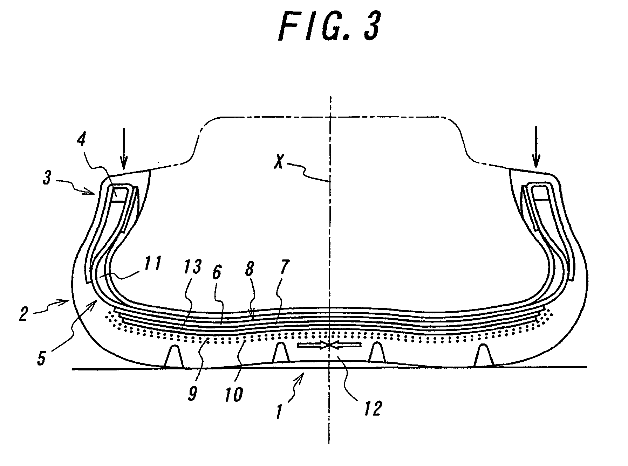

According to the tire having the above structure, in case of running under loading on a road surface having a low friction coefficient at a dropping state of an internal pressure as shown in FIG. 3, the additional belt layer 13 having a high compression rigidity and made of steel cords arranged at a large cord angle with respect to the equatorial plane E effectively functions as a shore member developing a large compression resistance to the action of external force in a rising direction of a central part of the tread portion 1 from the road surface and hence the bending resistance to effectively control the bending deformation of the tread portion 1, and hence the occurrence of troubles such as separation failure, breakage and the like of the belt layers 6, 7 is effectively prevented over a long time of period.

### [EXAMPLE]

Each tire of Examples and Comparative Examples having a tire size of 245/40 R18 and a structure shown in FIG. 2 and dimensions shown in Table 1, in which a rubber reinforcing layer made of low-loss, high-rigidity rubber and having a maximum thickness of 8 mm and a cap of two layers each made of nylon fiber cords are arranged and a width of an inner belt layer is 200 mm and a width of an outer belt layer is 190 mm and a width of an additional belt layer is 180 mm, is assembled onto a rim of 18x8JJ and inflated under an air pressure of 230 kPa or 0 kPa. With respect to the steering stability on ice road, the rising quantity of a tread portion on ice road in the leakage of the internal pressure and the run-flat durability whether or not the running over 200 km can be completed without causing troubles during the running at a speed of 89 km/h at a tire internal pressure of 0 kPa under a load of 4.81 kN, tests are conducted to obtain results as shown in Table 1.

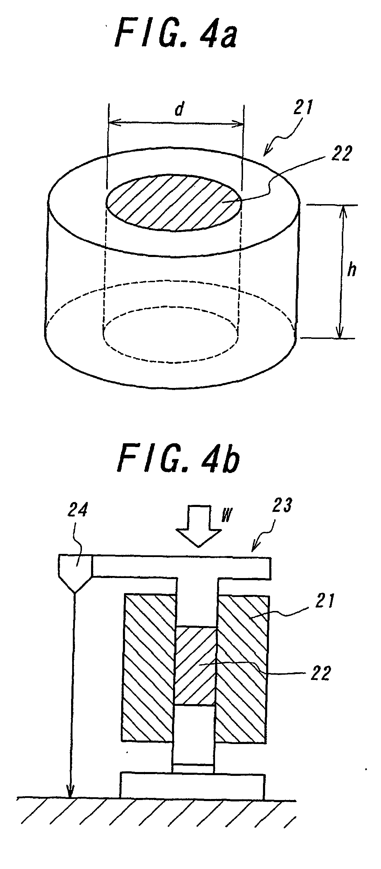

In Table 1, a bulk modulus of elasticity of a tread rubber is calculated from a relation between load W and displacement by setting a test piece 22 of the tread rubber into a metal sleeve 21 having an inner diameter d of 14 mm and a height h of 28 mm with no space therebetween as shown in FIG. 4a and attaching the metal sleeve 21 to a compression testing machine 23 as shown in FIG. 4b and applying a load W to upper and lower faces of the test piece 22 at a rate of 0.6 mm/min to measure a deformation quantity of the test piece by means of a laser displacement meter 24.

Also, the rising quantity of the tread portion on ice road is evaluated by measuring a shape of a tread surface of the tire stopped on the ice road and made up with gypsum.

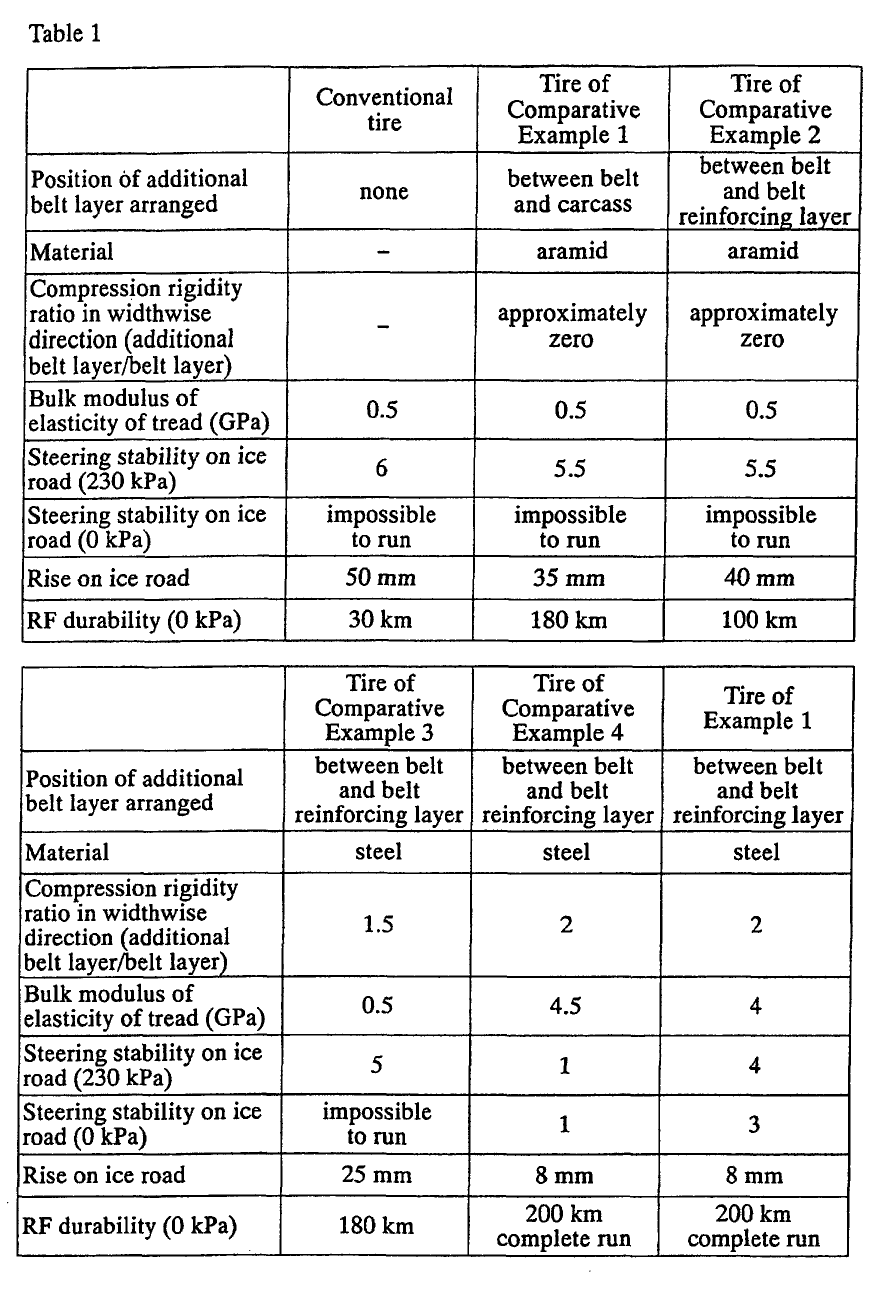

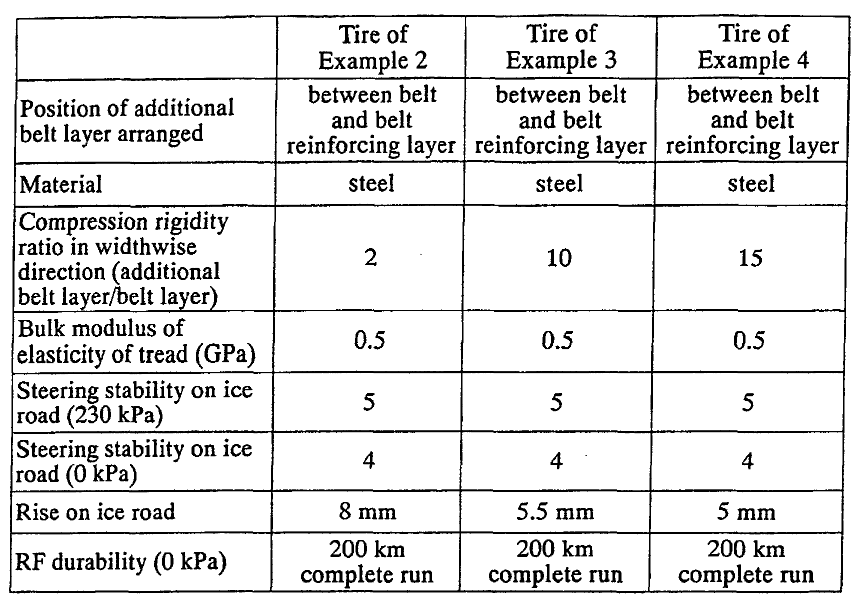

As seen from Table 1, all tires of Examples 1-4 having a compression rigidity ratio in widthwise direction of not less than 2 and a bulk modulus of elasticity of tread of not more than 4 GPa sufficiently reduce the rising quantity of the tread portion on ice road while highly ensuring the steering stability on ice road under an inflation of the tire internal pressure and can realize an excellent steering stability on ice road under an internal pressure of 0 Pa, and also can develop an excellent run-flat durability.

### [INDUSTRIAL APPLICABILITY]

As seen from the above, according to the invention, the bulk modulus of elasticity of the tread rubber can be made small as in the studless tire and the occurrence of the buckling in the tread portion can be effectively suppressed to sufficiently prevent the occurrence of separation failure, breakage and the like of the belt layer.

## Claims

1. A pneumatic tire comprising a tread portion, a pair of sidewall portions continuing to the tread portion, a bead portion continuing to an inner peripheral side of each sidewall portion, a radial carcass comprised of one or more carcass plies extending between bead cores arranged in the respective bead portions to reinforce these portions, a belt comprised of two or more belt layers reinforcing the tread portion at an outer peripheral side of a crown portion of the radial carcass, cords of which layers being crossed with each other, and a rubber reinforcing layer arranged over substantially a full region of the sidewall portion along an inner face of the radial carcass and having substantially a crescent-shaped form at its cross section, in which a tread rubber forming a ground contact face of the tread is a rubber having a bulk modulus of elasticity of not more than 4 GPa, which is usually used in a studless tire, and an additional belt layer of cords having a cord angle larger than those of the belt layers with respect to an equatorial plane of the tire is arranged on an outer peripheral side of the belt and has a compression rigidity in widthwise direction of the tread of 2 times or more larger than that of the belt layer.

2. A pneumatic tire according to claim 1, wherein the additional belt layer is made of steel cords.

3. A pneumatic tire according to claim 1 or 2, wherein the additional belt layer is arranged adjacent to the belt.

4. A pneumatic tire according to any one of claims 1 to 3, wherein the cords of the additional belt layer are extended in the same extending direction of the cords in an outermost belt layer with respect to the equatorial plane of the tire.

5. A pneumatic tire according to any one of claims 1 to 3, wherein the cords of the additional belt layer are extended in a direction opposite to the extending direction of the cords in an outermost belt layer with respect to the equatorial plane of the tire.

6. A pneumatic tire according to any one of claims 1 to 5, wherein a cord angle of the additional belt layer with respect to the equatorial plane of the tire is within a range of 40-90°.

7. A pneumatic tire according to any one of claims 1 to 6, wherein a width of the additional belt layer is within a range of 30-120% of a belt width.

8. A pneumatic tire according to any one of claims 1 to 7, wherein the carcass ply is made of organic fiber cords.
